(19) Europäisches Patentamt
European Patent Office
Office européen des brevets

(11) **EP 3 761 413 A1**

(12) **EUROPEAN PATENT APPLICATION**
published in accordance with Art. 153(4) EPC

(43) Date of publication:
06.01.2021 Bulletin 2021/01

(51) Int Cl.:
*H01M 4/525* (2010.01)     *C01G 53/00* (2006.01)
*H01M 4/505* (2010.01)

(21) Application number: 19760852.4

(22) Date of filing: 28.02.2019

(86) International application number:
**PCT/JP2019/007782**

(87) International publication number:
**WO 2019/168091 (06.09.2019 Gazette 2019/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  01.03.2018  JP 2018036806

(71) Applicants:
• **SUMITOMO CHEMICAL COMPANY LIMITED**
**Chuo-ku**
**Tokyo 104-8260 (JP)**

• **Tanaka Chemical Corporation**
**Fukui-shi, Fukui 910-3131 (JP)**

(72) Inventors:
• **TAKAMORI Kenji**
**Fukui-shi, Fukui 910-3131 (JP)**
• **KOBAYASHI Ryota**
**Fukui-shi, Fukui 910-3131 (JP)**

(74) Representative: **Vossius & Partner**
**Patentanwälte Rechtsanwälte mbB**
**Siebertstrasse 3**
**81675 München (DE)**

(54) **LITHIUM METAL COMPOSITE OXIDE, LITHIUM SECONDARY BATTERY POSITIVE ELECTRODE ACTIVE MATERIAL, POSITIVE ELECTRODE, AND LITHIUM SECONDARY BATTERY**

(57)     A lithium metal composite oxide into or from which lithium ions are dopable or dedopable, in which the lithium metal composite oxide contains at least nickel and satisfies all of the following requirements of (1) to (3). (1) A BET specific surface area is 1.0 m$^2$/g or less. (2) When an average secondary particle diameter $D_{50}$ is indicated as X $\mu$m and a calculated particle diameter is indicated as Y $\mu$m, the ratio (X/Y) is 1.1 or more and 2.9 or less. Here, the calculated particle diameter is calculated by the following method. Calculated particle diameter (Y) = 2 × 3 / (BET specific surface area × tap density) (3) The ratio of the amount of residual lithium (mass%) contained in the lithium metal composite oxide to BET specific surface area (m$^2$/g) (amount of residual lithium / BET specific surface area) is 0.25 or less.

**Description**

[Technical Field]

The present invention relates to a lithium metal composite oxide, a positive electrode active material for a lithium secondary battery, a positive electrode, and a lithium secondary battery.
Priority is claimed on Japanese Patent Application No. 2018-036806, filed on March 1, 2018, the content of which is incorporated herein by reference.

[Background Art]

A lithium metal composite oxide powder has been used as a positive electrode active material for a lithium secondary battery. Lithium secondary batteries are already in practical use not only for small power sources in mobile phone applications, notebook personal computer applications, and the like but also for medium-sized and large-sized power sources in automotive applications, power storage applications, and the like.
The lithium secondary battery deteriorates due to repeated charging and discharging. For example, when the lithium secondary battery is repeatedly charged and discharged, the internal resistance of the battery increases and the output thereof tends to decrease. In Patent Literature 1, as a positive electrode active material capable of reducing internal resistance and improving output, a positive electrode active material is described in which the fillability represented by (tap density/true density) $\times$ 100 [%] is 38% or more and less than 52%.

[Citation List]

[Patent Literature]

[Patent Literature 1]
Japanese Unexamined Patent Application, First Publication No. 2006-318929

[Summary of Invention]

[Technical Problem]

While the application fields of lithium secondary batteries are expanding, positive electrode active materials for lithium secondary batteries are required to have higher output and to reduce the amount of gas generated during charging and discharging.
The present invention has been made in view of the above circumstances, and an object thereof is to provide a lithium metal composite oxide which has a low internal resistance in a battery, excellent output characteristics, and a small amount of gas generated, a positive electrode active material for a lithium secondary battery using the lithium metal composite oxide, a positive electrode, and a lithium secondary battery.

[Solution to Problem]

That is, the present invention includes the inventions of the following [1] to [9].

[1] A lithium metal composite oxide into or from which lithium ions are dopable or dedopable, in which the lithium metal composite oxide contains at least nickel and satisfies all of the following requirements of (1) to (3):

(1) a BET specific surface area is 1.0 m$^2$/g or less,
(2) when an average secondary particle diameter $D_{50}$ is indicated as X $\mu$m and a calculated particle diameter is indicated as Y $\mu$m, the ratio (X/Y) is 1.1 or more and 2.9 or less, where the calculated particle diameter is calculated by the following method,

$$\text{calculated particle diameter (Y)} = 2 \times 3 \,/\, (\text{BET specific surface area} \times \text{tap}$$

$$\text{density),}$$

and

(3) the ratio (amount of residual lithium/BET specific surface area) of the amount of residual lithium (mass%) contained in the lithium metal composite oxide to the BET specific surface area ($m^2$/g) is 0.25 or less.

[2] The lithium metal composite oxide according to [1], in which the lithium metal composite oxide satisfies Composition Formula (I).

$$Li[Li_x(Ni_{(1-y-z-w)}Co_yM_{nz}M_w)_{1-x}]O_2 \dots \qquad (I)$$

(in Formula (I), $-0.1 \leq x \leq 0.2$, $0 \leq y \leq 0.5$, $0 \leq z \leq 0.5$, $0 \leq w \leq 0.1$, and $y + z + w \leq 1$ are satisfied, and M represents one or more elements selected from the group consisting of Fe, Cu, Ti, Mg, Al, W, B, Mo, Nb, Zn, Sn, Zr, Ga, and V)

[3] The lithium metal composite oxide according to [2], in which $y + z + w \leq 0.5$ is satisfied in Composition Formula (I).

[4] The lithium metal composite oxide according to any one of [1] to [3], in which, in a powder X-ray diffraction measurement using CuKa radiation, when a half-width of a diffraction peak in a range of $2\theta = 36.7 \pm 1°$ is indicated as A and a half-width of a diffraction peak in a range of $2\theta = 48.6 \pm 1°$ is indicated as B, A/B is 0.88 or more.

[5] The lithium metal composite oxide according to any one of [1] to [4], in which a sulfate radical content is 5000 ppm or less.

[6] The lithium metal composite oxide according to any one of [1] to [5], in which a moisture content is 1000 ppm or less.

[7] A positive electrode active material for a lithium secondary battery, including: the lithium metal composite oxide according to any one of [1] to [6].

[8] A positive electrode including: the positive electrode active material for a lithium secondary battery according to [7].

[9] A lithium secondary battery including: the positive electrode according to [8].

[Advantageous Effects of Invention]

According to the present invention, it is possible to provide a lithium metal composite oxide which has a low battery resistance, excellent output characteristics, and a small amount of gas generated, a positive electrode active material for a lithium secondary battery using the lithium metal composite oxide, a positive electrode, and a lithium secondary battery.

[Brief Description of Drawings]

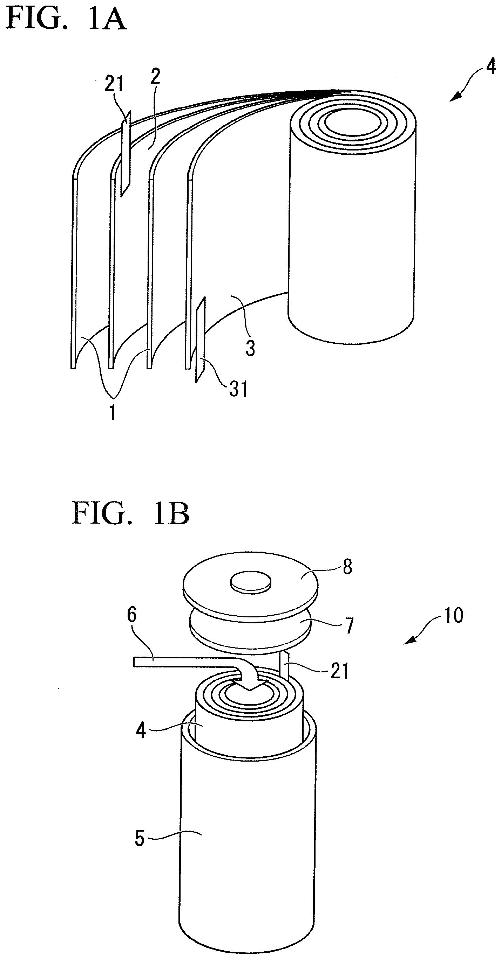

Fig. 1A is a schematic configuration view illustrating an example of a lithium-ion secondary battery.
Fig. 1B is a schematic configuration view illustrating an example of the lithium-ion secondary battery.

[Description of Embodiments]

<Lithium Metal Composite Oxide Powder>

The present invention is a lithium metal composite oxide into or from which lithium ions are dopable or dedopable.

The lithium metal composite oxide of the present embodiment contains at least nickel and satisfies all of the following requirements of (1) to (3).

(1) A BET specific surface area is 1.0 $m^2$/g or less.

(2) When an average secondary particle diameter $D_{50}$ is indicated as X $\mu$m and a calculated particle diameter is indicated as Y $\mu$m, the ratio (X/Y) is 1.1 or more and 2.9 or less. Here, the calculated particle diameter is calculated by the following method.

$$\text{Calculated particle diameter (Y)} = 2 \times 3 / (\text{BET specific surface area} \times \text{tap density})$$

(3) The ratio (amount of residual lithium/BET specific surface area) of the amount of residual lithium (mass%) contained in the lithium metal composite oxide to the BET specific surface area ($m^2$/g) is 0.25 or less.

• Requirement of (1)

In the lithium metal composite oxide of the present embodiment, the BET specific surface area is 1.0 m²/g or less, preferably 0.9 m²/g or less, more preferably 0.8 m²/g or less, and particularly preferably 0.7 m²/g or less. The BET specific surface area thereof is preferably 0.05 m²/g or more, more preferably 0.1 m²/g or more, and particularly preferably 0.15 m²/g or more.

The upper limit and the lower limit of the BET specific surface area can be randomly combined. As an example, the BET specific surface area is preferably 0.05 m²/g or more and 0.9 m²/g or less, more preferably 0.1 m²/g or more and 0.8 m²/g or less, and even more preferably 0.15 m²/g or more and 0.7 m²/g or less.

By causing the BET specific surface area to be the upper limit or less, an excessive increase in the contact area between the lithium metal composite oxide and an electrolytic solution can be suppressed. Accordingly, gas generation can be suppressed and the battery can be prevented from swelling. By causing the BET specific surface area to be the lower limit or more, it is easy to improve output characteristics.

In a measurement of the BET specific surface area, nitrogen gas is used as an adsorption gas. For example, the BET specific surface area is a value obtained by drying 1 g of a powder to be measured in a nitrogen atmosphere at 105°C for 30 minutes, and performing a measurement using a BET specific surface area meter (for example, Macsorb (registered trademark) manufactured by MOUNTECH Co., Ltd.).

• Requirement of (2)

In the lithium metal composite oxide of the present embodiment, when the average secondary particle diameter $D_{50}$ is indicated as $X$ μm and the calculated particle diameter is indicated as $Y$ μm, the ratio $(X/Y)$ is 1.1 or more and 2.9 or less. Here, the calculated particle diameter is calculated by the following method.

$$\text{Calculated particle diameter } (Y) = 2 \times 3 \, / \, (\text{BET specific surface area} \times \text{tap density})$$

$X/Y$ indicates the porosity of the lithium metal composite oxide. A larger $X/Y$ value means that the lithium metal composite oxide has more voids.

$X/Y$ is preferably 1.15 or more, and more preferably 1.18 or more. In addition, $X/Y$ is preferably 2.8 or less, and more preferably 2.5 or less. The upper limit and the lower limit thereof can be randomly combined.

In the present embodiment, for example, $X/Y$ is preferably 1.15 or more and 2.8 or less, and more preferably 1.18 or more and 2.5 or less.

When $X/Y$ is the lower limit or more, a void structure that allows the electrolytic solution to easily penetrate thereinto is formed, and a lithium metal composite oxide having low resistance can be obtained. Furthermore, by causing $X/Y$ to be the upper limit or less, an excessive increase in the contact area with the electrolytic solution due to excessive voids can be suppressed, and the battery can be prevented from swelling.

In the present embodiment, the "calculated particle diameter" is a secondary particle diameter calculated from the BET specific surface area and the tap density.

Assuming that the secondary particles are spherical virtual particles, the virtual particle volume and virtual particle surface area of the secondary particles can be calculated by the following formulas. Here, "r" is the radius of the secondary particle.

Virtual particle volume:

$$V = 4/3\pi r^3$$

Virtual particle surface area:

$$S = 4\pi r^2$$

Here, considering that "tap density = density of secondary particles = density of virtual particles", the mass $W$ per virtual particle is obtained by Formula (i).

$$W = \text{tap density} \times \text{virtual particle volume } V \dots \text{Formula (i)}$$

Furthermore, considering that "BET specific surface area = specific surface area of secondary particles = specific surface area of virtual particles", the BET specific surface area is obtained by Formula (ii).

$$\text{BET specific surface area} = \text{specific surface area of virtual particles} = (\text{surface}$$

$$\text{area } S \text{ of virtual particles}) / (\text{mass } W \text{ of virtual particles}) \dots \text{Formula (ii)}$$

Substituting Formula (i) into Formula (ii), the radius r of the secondary particles is expressed by the following formula.

$$r = 3 / (\text{tap density} \times \text{BET specific surface area})$$

Since the secondary particle diameter is twice the radius r, the calculated particle diameter can be calculated by the following formula.

$$\text{Calculated particle diameter} = 2r = 2 \times 3 / (\text{tap density} \times \text{BET specific surface}$$

$$\text{area})$$

(Tap density)

The tap density can be measured based on JIS R 1628-1997.

(Average Secondary Particle Diameter)

In the present embodiment, the average secondary particle diameter is calculated by the following method.
In the present embodiment, the "average secondary particle diameter" of the lithium metal composite oxide refers to a value measured by the following method (laser diffraction scattering method).
Using a laser diffraction particle size distribution meter (product number: LA-950, manufactured by HORIBA, Ltd.), 0.1 g of the lithium metal composite oxide is put into 50 ml of a 0.2 mass% sodium hexametaphosphate aqueous solution to obtain a dispersion liquid in which the powder is dispersed. The particle size distribution of the obtained dispersion liquid is measured to obtain a volume-based cumulative particle size distribution curve. In the obtained cumulative particle size distribution curve, the value of the particle diameter ($D_{50}$) viewed from the fine particle side at a 50% cumulative point is referred to as the average secondary particle diameter of the lithium metal composite oxide.

• Requirement of (3)

In the lithium metal composite oxide of the present embodiment, the ratio of the amount of residual lithium (mass%) contained in the lithium metal composite oxide to the BET specific surface area ($m^2/g$) (amount of residual lithium/BET specific surface area) is 0.25 or less, preferably 0.24 or less, and more preferably 0.23 or less.
When the residual lithium present on the surface of the lithium metal composite oxide comes into contact with the electrolytic solution, gas is generated, which causes the battery to swell. When the requirement of (3) is in the above specific range, the amount of residual lithium present on the surface of the lithium metal composite oxide is small, so that the generation of gas can be suppressed.
In the present embodiment, as the amount of residual lithium (mass%) contained in the lithium metal composite oxide, the amount of lithium atoms is calculated from the amount of lithium carbonate and the amount of lithium hydroxide measured by neutralization titration and taken as the amount of residual lithium.

<<Composition Formula (I)>>

The lithium metal composite oxide of the present embodiment is preferably expressed by Composition Formula

(I).

$$Li[Li_x(Ni_{(1-y-z-w)}Co_yMn_zMw)_{1-x}]O_2 \ldots \qquad (I)$$

(in Formula (I), $-0.1 \leq x \leq 0.2$, $0 \leq y \leq 0.5$, $0 \leq z \leq 0.5$, $0 \leq w \leq 0.1$, and $y + z + w < 1$ are satisfied, and M represents one or more elements selected from the group consisting of Fe, Cu, Ti, Mg, Al, W, B, Mo, Nb, Zn, Sn, Zr, Ga, and V)

From the viewpoint of obtaining a lithium secondary battery having high cycle characteristics, x in Composition Formula (I) is preferably more than 0, more preferably 0.01 or more, and even more preferably 0.02 or more. In addition, from the viewpoint of obtaining a lithium secondary battery having higher initial Coulombic efficiency, x in Composition Formula (I) is preferably 0.1 or less, more preferably 0.08 or less, and even more preferably 0.06 or less.

The upper limit and the lower limit of x can be randomly combined.

In the present embodiment, x is preferably more than 0 and 0.1 or less, more preferably 0.01 or more and 0.08 or less, and even more preferably 0.02 or more and 0.06 or less.

In addition, from the viewpoint of obtaining a lithium secondary battery having low battery resistance, y in Composition Formula (I) is preferably 0.005 or more, more preferably 0.01 or more, and even more preferably 0.05 or more. In addition, from the viewpoint of obtaining a lithium secondary battery having high thermal stability, y in Composition Formula (I) is preferably 0.35 or less, more preferably 0.33 or less, and even more preferably 0.32 or less.

The upper limit and the lower limit of y can be randomly combined.

In the present embodiment, y is preferably 0.005 or more and 0.35 or less, more preferably 0.01 or more and 0.33 or less, and even more preferably 0.05 or more and 0.32 or less.

In addition, from the viewpoint of obtaining a lithium secondary battery having high cycle characteristics, z in Composition Formula (I) is preferably 0.01 or more, more preferably 0.02 or more, and even more preferably 0.1 or more. In addition, from the viewpoint of obtaining a lithium secondary battery having high storage characteristics at high temperatures (for example, in an environment at 60°C), z in Composition Formula (I) is preferably 0.4 or less, more preferably 0.38 or less, and even more preferably 0.35 or less.

The upper limit and the lower limit of z can be randomly combined.

In the present embodiment, z is preferably 0.01 or more and 0.4 or less, more preferably 0.02 or more and 0.38 or less, and even more preferably 0.1 or more and 0.35 or less.

In addition, from the viewpoint of obtaining a lithium secondary battery having low battery resistance, w in Composition Formula (I) is preferably 0.0005 or more, more preferably 0.001 or more, and even more preferably 0.002 or more. In addition, from the viewpoint of obtaining a lithium secondary battery having a high discharge capacity at a high current rate, w in Composition Formula (I) is preferably 0.09 or less, more preferably 0.08 or less, and even more preferably 0.07 or less.

The upper limit and the lower limit of w can be randomly combined.

In the present embodiment, w is preferably 0.0005 or more and 0.09 or less, more preferably 0.001 or more and 0.08 or less, and even more preferably 0.002 or more and 0.07 or less.

In Composition Formula (I), $y + z + w$ is preferably 0.5 or less, and more preferably 0.3 or less.

M in Composition Formula (I) represents one or more elements selected from the group consisting of Fe, Cu, Ti, Mg, Al, W, B, Mo, Nb, Zn, Sn, Zr, Ga, La, and V.

Furthermore, M in Composition Formula (I) is preferably one or more elements selected from the group consisting of Ti, Mg, Al, W, B, and Zr from the viewpoint of obtaining a lithium secondary battery having high cycle characteristics, and is preferably one or more elements selected from the group consisting of Al, W, B, and Zr from the viewpoint of obtaining a lithium secondary battery having high thermal stability.

In the lithium metal composite oxide of the present embodiment, in a powder X-ray diffraction measurement using CuKa radiation, when a half-width of a diffraction peak in a range of $2\theta = 36.7 \pm 1°$ is indicated as A and a half-width of a diffraction peak in a range of $2\theta = 48.6 \pm 1°$ is indicated as B, A/B is preferably 0.88 or more.


<<Residual Sulfate Radical>>

In the lithium metal composite oxide of the present embodiment, the sulfate radical content is preferably 5000 ppm or less, more preferably 4500 ppm or less, even more preferably 4000 pp or less.

In the present specification, the "sulfate radical" means a sulfur-containing compound such as $SO_4^{2-}$ remaining in the particles contained in the lithium metal composite oxide powder after a calcining step.


<<Moisture Content>>

In the lithium metal composite oxide of the present embodiment, the moisture content is preferably 1000 ppm or less, more preferably 700 ppm or less, and even more preferably 400 ppm or less. The moisture content can be measured by using a Karl Fischer moisture meter or the like.

[Manufacturing Method of Lithium Metal Composite Oxide]

In manufacturing of the lithium metal composite oxide of the present invention, first, it is preferable that a metal composite compound containing metals other than lithium, that is, containing at least Ni and any one or more optional elements of Co, Mn, Fe, Cu, Ti, Mg, Al, W, B, Mo, Nb, Zn, Sn, Zr, Ga, and V be prepared, and the metal composite compound be calcined with an appropriate lithium compound. As the metal composite compound, a metal composite hydroxide or a metal composite oxide is preferable. Hereinafter, an example of a manufacturing method of a positive electrode active material will be described by separately describing a step of manufacturing the metal composite compound and a step of manufacturing the lithium metal composite oxide.

(Step of Manufacturing Metal Composite Compound)

The metal composite compound can be manufactured by a generally known batch coprecipitation method or continuous coprecipitation method. Hereinafter, the manufacturing method will be described in detail, taking a metal composite hydroxide containing nickel, cobalt, manganese as metals as an example.
First, by a coprecipitation method, particularly a continuous method described in Japanese Unexamined Patent Application, First Publication No. 2002-201028, a nickel salt solution, a cobalt salt solution, a manganese salt solution, and a complexing agent are reacted, whereby a nickel cobalt manganese metal composite hydroxide is manufactured.
A nickel salt which is a solute of the nickel salt solution is not particularly limited, and for example, any of nickel sulfate, nickel nitrate, nickel chloride, and nickel acetate can be used. As a cobalt salt which is a solute of the cobalt salt solution, for example, any of cobalt sulfate, cobalt nitrate, and cobalt chloride can be used. As a manganese salt which is a solute of the manganese salt solution, for example, any of manganese sulfate, manganese nitrate, and manganese chloride can be used. The above metal salts are used in a ratio according to the composition ratio of the target nickel cobalt manganese metal composite hydroxide. Also, water is used as a solvent.
The complexing agent is capable of forming a complex with ions of nickel, cobalt, and manganese in an aqueous solution, and examples thereof include ammonium ion donors (ammonium sulfate, ammonium chloride, ammonium carbonate, ammonium fluoride, and the like), hydrazine, ethylenediaminetetraacetic acid, nitrilotriacetic acid, uracildiacetic acid, and glycine. The complexing agent may not be contained, and in a case where the complexing agent is contained, the amount of the complexing agent contained in the mixed solution containing the nickel salt solution, the cobalt salt solution, the optional element M salt solution, and the complexing agent is, for example, more than 0 and 2.0 or less in terms of molar ratio to the sum of the number of moles of the metal salts.
During the precipitation, an alkali metal hydroxide (for example, sodium hydroxide, or potassium hydroxide) is added, if necessary, in order to adjust the pH value of the aqueous solution.
When the complexing agent in addition to the nickel salt solution, the cobalt salt solution, and the manganese salt solution is continuously supplied to a reaction tank, nickel, cobalt, and manganese react, whereby a nickel cobalt manganese metal composite hydroxide is manufactured. During the reaction, the temperature of the reaction tank is controlled to be, for example, 20°C or higher and 80°C or lower, and preferably in a range of 30°C or higher to 70°C or lower, and the pH value in the reaction tank is controlled to be, for example, a pH of 9 or more and a pH of 13 or less, and preferably in a range of a pH of 11 or more to less than a pH of 13 when the temperature of the aqueous solution is 40°C such that the materials in the reaction tank are appropriately stirred. As the reaction tank, a type which causes the formed reaction precipitate to overflow for separation can be used.
By appropriately controlling the concentrations of the metal salts supplied to the reaction tank, the stirring speed, the reaction temperature, the reaction pH, the reaction time, calcining conditions, which will be described later, and the like, it is possible to control various physical properties such as the requirements of (1), (2), and (3) of a lithium metal composite oxide, which is finally obtained in the following steps. In particular, in order to realize the desired BET specific surface area shown in the above requirement of (1) and the porosity shown in (2), in addition to the control of the above conditions, bubbling by various gases, such as inert gases including nitrogen, argon, and carbon dioxide and oxidizing gases including air and oxygen, or a mixed gas thereof may be used in combination. To promote the oxidation state, in addition to the gases, peroxides such as hydrogen peroxide, peroxide salts such as permanganate, perchlorate, hypochlorite, nitric acid, halogen, ozone, and the like can be used. To promote the reduction state, in addition to the gases, organic acids such as oxalic acid and formic acid, sulfites, hydrazine, and the like can be used.
For example, when the reaction pH in the reaction tank is increased, the primary particle diameter of the metal composite compound becomes small, and a metal composite compound having a high BET specific surface area is easily obtained. On the other hand, when the reaction pH is lowered, a metal composite compound having a low BET specific surface area is easily obtained. Moreover, when the oxidation state in the reaction tank is increased, a metal composite oxide having a large number of voids is easily obtained. On the other hand, when the oxidation state is lowered, a dense metal oxide is easily obtained.

Finally, by accurately controlling various conditions such as the reaction pH and the oxidation state so that the metal composite compound has desired physical properties, or by continuously flowing an oxidizing gas into the reaction tank while flowing an inert gas such as nitrogen gas, the pore diameter and the pore amount of the voids of the metal composite compound can be controlled. The reaction time in the presence of the oxidizing gas is preferably set to 1 hour or longer and 20 hours or shorter. In addition, the pore diameter and the pore amount of the voids of the metal composite compound can be controlled by adding an element other than nickel, cobalt, and manganese. For example, by adding an aluminum salt solution, the pore diameter and the pore amount of the voids of the metal composite compound can be increased.

Regarding the BET specific surface area shown in the requirement of (1) and the porosity shown in (2) of the lithium metal composite oxide powder in the present embodiment, the requirements of (1) and (2) can be within the specific ranges of the present embodiment by controlling calcining conditions, which will be described later, and the like, using the metal composite compound described above.

After the above reaction, the obtained reaction precipitate is washed with water and then dried to isolate a nickel cobalt manganese hydroxide as a nickel cobalt manganese composite compound. In addition, the reaction precipitate may be washed with a weak acid water or an alkaline solution containing sodium hydroxide or potassium hydroxide, as necessary.

In the above example, the nickel cobalt manganese composite hydroxide is manufactured, but a nickel cobalt manganese composite oxide may be prepared. When a nickel cobalt manganese composite oxide is adjusted from the nickel cobalt manganese composite oxide, an oxidation step of performing oxidation through calcining at a temperature of 300°C or higher and 800°C or lower in a range of 1 hour or longer and 10 hours or shorter may be performed.

(Step of Manufacturing Lithium Metal Composite Oxide)

• Mixing Step

The metal composite oxide or the metal composite hydroxide is dried and thereafter mixed with a lithium compound. As the lithium compound, any one or two or more of lithium carbonate, lithium nitrate, lithium acetate, lithium hydroxide, lithium hydroxide hydrate, and lithium oxide can be mixed and used.

After drying the metal composite oxide or the metal composite hydroxide, classification may be appropriately performed thereon. The amounts of the lithium compound and the metal composite hydroxide mentioned above are used in consideration of the composition ratio of the final object. For example, in a case where a nickel cobalt manganese composite hydroxide is used, the lithium compound and the metal composite hydroxide are used in proportions corresponding to the target composition ratio.

Furthermore, when the ratio of the amount of lithium atoms (mol) contained in the lithium compound to the total amount (mol) of metal elements contained in the metal composite hydroxide is 1.00 or more, the effect of the present invention can be enhanced. In addition, by causing the ratio to be 1.3 or less, the requirement of (3) of the present invention is easily achieved. Finally, by adjusting the ratio and calcining conditions and washing conditions, which will be described later, the ratio can be controlled within the range of the requirement of (3).

• Main Calcining Step

By calcining a mixture of the nickel cobalt manganese metal composite hydroxide and the lithium salt, a lithium-nickel cobalt manganese composite oxide is obtained. For the calcining, dry air, oxygen atmosphere, inert atmosphere, and the like are used depending on the desired composition, and a plurality of heating steps are performed as necessary.

The calcining temperature of the metal composite oxide or the metal composite hydroxide and the lithium compound such as lithium hydroxide or lithium carbonate is not particularly limited. In the present embodiment, in order to cause the BET specific surface area shown in the requirement of (1) of the lithium metal composite oxide and the porosity shown in the requirement of (2) to be within the specific ranges of the present invention, the calcining temperature is preferably 600°C or higher and 1100°C or lower, more preferably 750°C or higher and 1050°C or lower, and even more preferably 800°C or higher and 1025°C or lower.

In the present specification, the calcining temperature means the temperature of the atmosphere in a calcining furnace, and is the highest temperature of the holding temperature in the main calcining step (hereinafter, sometimes referred to as the highest holding temperature), and in a case of the main calcining step having the plurality of heating steps, means the temperature during heating at the highest holding temperature in each heating step.

The calcining time is preferably 3 hours or longer and 50 hours or shorter. When the calcining time exceeds 50 hours, there is no problem in battery performance, but the battery performance tends to be substantially inferior due to the volatilization of Li. When the calcining time is shorter than 3 hours, the crystals develop poorly, and the battery performance tends to be deteriorated. In addition, it is also effective to perform preliminary calcining before the above-mentioned calcining. Such preliminary calcining is preferably performed at a temperature in a range of 300°C or higher and 850°C or lower for 1 hour or longer and 10 hours or shorter.

In the present embodiment, the temperature rising rate of the heating step in which the highest holding temperature is reached is preferably 180°C/hr or more, more preferably 200°C/hr or more, and particularly preferably 250°C/hr or more.

The temperature rising rate of the heating step in which the highest holding temperature is reached is calculated from the time from when the temperature rising is started until a holding temperature, which will be described, is reached in a calcining apparatus.

• Washing Step

After the calcining, the obtained calcined product may be washed. For the washing, pure water or an alkaline washing solution can be used.

Examples of the alkaline washing solution include one or more anhydrides selected from the group consisting of LiOH (lithium hydroxide), NaOH (sodium hydroxide), KOH (potassium hydroxide), $Li_2CO_3$ (lithium carbonate), $Na_2CO_3$ (sodium carbonate), $K_2CO_3$ (potassium carbonate), and $(NH_4)_2CO_3$ (ammonium carbonate), and aqueous solutions of the hydrates thereof. Moreover, ammonia can also be used as an alkali.

In the washing step, as a method of bringing the washing solution and the lithium metal composite compound into contact with each other, there is a method of adding the lithium metal composite compound into the aqueous solution of each washing solution and stirring the resultant, a method of applying the aqueous solution of each washing solution as shower water to the lithium metal composite compound, and a method of adding the lithium metal composite compound into the aqueous solution of each washing solution, stirring the resultant, separating the lithium metal composite compound from the aqueous solution of each washing solution, and then applying the aqueous solution of each washing solution as shower water to the lithium metal composite compound after being separated.

• Method for Manufacturing Positive Electrode Active Material for Lithium Secondary Battery Having Coating Particles or Coating Layer

In the case of manufacturing a positive electrode active material for a lithium secondary battery having coating particles or a coating layer, a coating raw material and the lithium composite metal compound are first mixed. Next, by performing a heat treatment as necessary, coating particles or a coating layer made of the lithium composite metal compound can be formed on the surface of primary particles or secondary particles of the lithium composite metal compound.

As the coating raw material, an oxide, hydroxide, carbonate, nitrate, sulfate, halide, oxalate, or alkoxide of one or more elements selected from the group consisting of aluminum, boron, titanium, zirconium, and tungsten can be used, and an oxide is preferable. As the coating raw material, aluminum oxide, aluminum hydroxide, aluminum sulfate, aluminum chloride, aluminum alkoxide, boron oxide, boric acid, titanium oxide, titanium chloride, titanium alkoxide, zirconium oxide, tungsten oxide, and tungstic acid can be adopted, and aluminum oxide, aluminum hydroxide, boron oxide, boric acid, zirconium oxide, and tungsten oxide are preferable.

In order to more efficiently coat the surface of the lithium composite metal compound with the coating raw material, the coating raw material is preferably finer than the secondary particle of the lithium composite metal compound. Specifically, the average secondary particle diameter of the coating raw material is preferably 1 $\mu$m or less, and more preferably 0.1 $\mu$m or less.

The lower limit of the average secondary particle diameter of the coating raw material is preferably as small as possible, and for example, is 0.001 $\mu$m. The average secondary particle diameter of the coating raw material can be measured by the same method as the average secondary particle diameter of the lithium-containing transition metal composite oxide.

The mixing of the coating raw material and the lithium composite metal compound may be performed in the same manner as the mixing during the manufacturing of the positive electrode active material for a lithium secondary battery. A method of mixing using a mixing apparatus that does not include mixing media such as balls and does not involve strong pulverization, such as a method of mixing using a powder mixer equipped with a stirring blade inside, is preferable. Furthermore, the coating layer can be more firmly attached to the surface of the lithium composite metal compound by being held in an atmosphere containing water after mixing.

The heat treatment conditions (temperature, holding time) in the heat treatment performed as necessary after the mixing of the coating raw material and the lithium composite metal compound may vary depending on the kind of the coating raw material. The heat treatment temperature is preferably set to be in a range of 300°C or higher and 850°C or lower, but is preferably a temperature equal to or lower than the calcining temperature of the lithium composite metal compound. When the temperature is higher than the calcining temperature of the lithium composite metal compound, there are cases where the coating raw material forms a solid solution with the lithium composite metal compound and the coating layer is not formed. The holding time in the heat treatment is preferably set to be shorter than the holding time at the time of calcining. As an atmosphere in the heat treatment, an atmosphere gas similar to that in the above-described calcining can be adopted.

A positive electrode active material for a lithium secondary battery can be obtained by forming the coating layer on the surface of the lithium composite metal compound using a technique such as sputtering, CVD, or vapor deposition.

Moreover, there are cases where the positive electrode active material for a lithium secondary battery is obtained by mixing and calcining the composite metal oxide or hydroxide, the lithium salt, and the coating raw material.

The lithium metal composite oxide obtained in the above step is suitably classified after pulverization and is regarded as a positive electrode active material applicable to a lithium secondary battery.

<Positive Electrode Active Material for Lithium Secondary Battery>

The present embodiment is a positive electrode active material for a lithium secondary battery containing the lithium metal composite oxide powder of the present embodiment.

<Lithium Secondary Battery>

Next, a positive electrode using the positive electrode active material for a lithium secondary battery containing the lithium metal composite oxide powder of the present embodiment, and a lithium secondary battery having the positive electrode will be described while describing the configuration of a lithium secondary battery.

An example of the lithium secondary battery of the present embodiment includes a positive electrode, a negative electrode, a separator interposed between the positive electrode and the negative electrode, and an electrolytic solution disposed between the positive electrode and the negative electrode.

Figs. 1A and 1B are schematic views illustrating an example of the lithium secondary battery of the present embodiment. A cylindrical lithium secondary battery 10 of the present embodiment is manufactured as follows.

First, as illustrated in Fig. 1A, a pair of separators 1 having a strip shape, a strip-shaped positive electrode 2 having a positive electrode lead 21 at one end, and a strip-shaped negative electrode 3 having a negative electrode lead 31 at one end are stacked in order of the separator 1, the positive electrode 2, the separator 1, and the negative electrode 3 and are wound to form an electrode group 4.

Next, as shown in Fig. 1B, the electrode group 4 and an insulator (not illustrated) are accommodated in a battery can 5, the can bottom is then sealed, the electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be manufactured.

The shape of the electrode group 4 is, for example, a columnar shape such that the cross-sectional shape when the electrode group 4 is cut in a direction perpendicular to the winding axis is a circle, an ellipse, a rectangle, or a rectangle with rounded corners.

In addition, as a shape of the lithium secondary battery having the electrode group 4, a shape defined by IEC60086, which is a standard for a battery defined by the International Electrotechnical Commission (IEC), or by JIS C 8500, can be adopted. For example, shapes such as a cylindrical shape and a square shape can be adopted.

Furthermore, the lithium secondary battery is not limited to the wound type configuration, and may have a stacked type configuration in which a stacked structure of a positive electrode, a separator, a negative electrode, and a separator is repeatedly stacked. The stacked type lithium secondary battery can be exemplified by a so-called coin type battery, a button type battery, and a paper type (or sheet type) battery.

Hereinafter, each configuration will be described in order.

(Positive Electrode)

The positive electrode of the present embodiment can be manufactured by first adjusting a positive electrode mixture containing a positive electrode active material, a conductive material, and a binder, and causing a positive electrode current collector to hold the positive electrode mixture.

(Conductive Material)

A carbon material can be used as the conductive material included in the positive electrode of the present embodiment. As the carbon material, there are graphite powder, carbon black (for example, acetylene black), a fibrous carbon material, and the like. Since carbon black is fine particles and has a large surface area, the addition of a small amount of carbon black to the positive electrode mixture increases the conductivity inside the positive electrode and thus improves the charge and discharge efficiency and output characteristics. However, when too much carbon black is added, both the binding force between the positive electrode mixture and the positive electrode current collector and the binding force inside the positive electrode mixture by the binder decrease, which causes an increase in internal resistance.

The proportion of the conductive material in the positive electrode mixture is preferably 5 parts by mass or more and 20 parts by mass or less with respect to 100 parts by mass of the positive electrode active material. In a case of using a fibrous carbon material such as graphitized carbon fiber or carbon nanotube as the conductive material, the proportion can be reduced. The ratio of the positive electrode active material to the total mass of the positive electrode mixture is preferably 80 to 98 mass%.

(Binder)

A thermoplastic resin can be used as the binder included in the positive electrode of the present embodiment.

As the thermoplastic resin, fluorine resins such as polyvinylidene fluoride (hereinafter, sometimes indicated as PVdF), polytetrafluoroethylene (hereinafter, sometimes indicated as PTFE), tetrafluoroethylene-hexafluoropropylene-vinylidene fluoride copolymers, hexafluoropropylene-vinylidene fluoride copolymers, and tetrafluoroethylene-perfluoro-ovinyl ether copolymers; and polyolefin resins such as polyethylene and polypropylene can be adopted.

These thermoplastic resins may be used as a mixture of two or more. By using a fluorine resin and a polyolefin resin as the binder and setting the ratio of the fluorine resin to the entire positive electrode mixture to 1 mass% or more and 10 mass% or less and the ratio of the polyolefin resin to 0.1 mass% or more and 2 mass% or less, a positive electrode mixture having both high adhesion to the positive electrode current collector and high bonding strength in the positive electrode mixture can be obtained.

(Positive Electrode Current Collector)

As the positive electrode current collector included in the positive electrode of the present embodiment, a strip-shaped member formed of a metal material such as Al, Ni, or stainless steel as the forming material can be used. Among these, from the viewpoint of easy processing and low cost, it is preferable to use Al as the forming material and process Al into a thin film.

As a method of causing the positive electrode current collector to hold the positive electrode mixture, a method of press-forming the positive electrode mixture on the positive electrode current collector can be adopted. In addition, the positive electrode mixture may be held by the positive electrode current collector by forming the positive electrode mixture into a paste using an organic solvent, applying the paste of the positive electrode mixture to at least one side of the positive electrode current collector, drying the paste, and pressing the paste to be fixed.

In a case of forming the positive electrode mixture into a paste, as the organic solvent which can be used, amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and N-methyl-2-pyrrolidone (hereinafter, sometimes indicated as NMP) can be adopted.

Examples of a method of applying the paste of the positive electrode mixture to the positive electrode current collector include a slit die coating method, a screen coating method, a curtain coating method, a knife coating method, a gravure coating method, and an electrostatic spraying method.

The positive electrode can be manufactured by the method mentioned above. (Negative Electrode)

The negative electrode included in the lithium secondary battery of the present embodiment may be capable of being doped with or dedoped from lithium ions at a potential lower than that of the positive electrode, and an electrode in which a negative electrode mixture containing a negative electrode active material is held by a negative electrode current collector, and an electrode formed of a negative electrode active material alone can be adopted.

(Negative Electrode Active Material)

As the negative electrode active material included in the negative electrode, materials that can be doped with or dedoped from lithium ions at a potential lower than that of the positive electrode, such as carbon materials, chalcogen compounds (oxides, sulfides, and the like), nitrides, metals, and alloys can be adopted.

As the carbon materials that can be used as the negative electrode active material, graphite such as natural graphite and artificial graphite, cokes, carbon black, pyrolytic carbons, carbon fibers, and an organic polymer compound calcined body can be adopted.

As the oxides that can be used as the negative electrode active material, oxides of silicon expressed by the formula $SiO_x$ (where, x is a positive real number) such as $SiO_2$ and SiO; oxides of titanium expressed by the formula

$TiO_x$ (where x is a positive real number) such as $TiO_2$ and TiO; oxides of vanadium expressed by the formula $VO_x$ (where x is a positive real number) such as $V_2O_5$ and $VO_2$; oxides of iron expressed by the formula $FeO_x$ (where x is a positive real number) such as $Fe_3O_4$, $Fe_2O_3$, and FeO; oxides of tin expressed by the formula $SnO_x$ (where x is a positive real number) such as $SnO_2$ and SnO; oxides of tungsten expressed by a general formula $WO_x$ (where, x is a positive real number) such as $WO_3$ and $WO_2$; and metal composite oxides containing lithium and titanium or vanadium such as $Li_4Ti_5O_{12}$ and $LiVO_2$ can be adopted.

As the sulfides that can be used as the negative electrode active material, sulfides of titanium expressed by the formula $TiS_x$ (where, x is a positive real number) such as $Ti_2S_3$, $TiS_2$, and TiS; sulfides of vanadium expressed by the formula $VS_x$ (where x is a positive real number) such $V_3S_4$, $VS_2$, and VS; sulfides of iron expressed by the formula $FeS_x$ (where x is a positive real number) such as $Fe_3S_4$, $FeS_2$, and FeS; sulfides of molybdenum expressed by the formula $MoS_x$ (where x is a positive real number) such as $Mo_2S_3$ and $MoS_2$; sulfides of tin expressed by the formula $SnS_x$ (where x is a positive real number) such as $SnS_2$ and SnS; sulfides of tungsten expressed by $WS_x$ (where x is a positive real number) such as $WS_2$; sulfides of antimony expressed by the formula $SbS_x$ (where x is a positive real number) such as $Sb_2S_3$; and sulfides of selenium expressed by the formula $SeS_x$ (where x is a positive real number) such as $Se_5S_3$, $SeS_2$, and SeS can be adopted.

As the nitrides that can be used as the negative electrode active material, lithium-containing nitrides such as $Li_3N$ and $Li_{3-x}A_xN$ (where A is either one or both of Ni and Co, and $0 < x < 3$ is satisfied) can be adopted.

These carbon materials, oxides, sulfides, and nitrides may be used singly or in combination of two or more. In addition, these carbon materials, oxides, sulfides, and nitrides may be either crystalline or amorphous.

Moreover, as the metals that can be used as the negative electrode active material, lithium metal, silicon metal, tin metal, and the like can be adopted.

As the alloys that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can be adopted.

These metals and alloys are mainly used alone as an electrode after being processed into, for example, a foil shape.

Among the above-mentioned negative electrode active materials, the carbon material mainly including graphite such as natural graphite and artificial graphite is preferably used because the potential of the negative electrode hardly changes from the uncharged state to the fully charged state during charging (the potential flatness is good), the average discharge potential is low, and the capacity retention ratio during repeated charging and discharging is high (the cycle characteristics are good). The shape of the carbon material may be, for example, a flaky shape such as natural graphite, a spherical shape such as mesocarbon microbeads, a fibrous shape such as graphitized carbon fiber, or an aggregate of fine powder.

The negative electrode mixture described above may contain a binder as necessary. As the binder, a thermoplastic resin can be adopted, and specifically, PVdF, thermoplastic polyimide, carboxymethylcellulose, polyethylene, and polypropylene can be adopted.

(Negative Electrode Current Collector)

As the negative electrode current collector included in the negative electrode, a strip-shaped member formed of a metal material, such as Cu, Ni, and stainless steel, as the forming material can be adopted. Among these, it is preferable to use Cu as the forming material and process Cu into a thin film because Cu is less likely to form an alloy with lithium and can be easily processed.

As a method of causing the negative electrode current collector to hold the negative electrode mixture, similarly to the case of the positive electrode, a method using press-forming, or a method of forming the negative electrode mixture into a paste using a solvent or the like, applying the paste onto the negative electrode current collector, drying the paste, and pressing the paste to be compressed can be adopted.

(Separator)

As the separator included in the lithium secondary battery of the present embodiment, for example, a material having a form such as a porous film, non-woven fabric, or woven fabric made of a material such as a polyolefin resin such as polyethylene and polypropylene, a fluorine resin, and a nitrogen-containing aromatic polymer can be used. In addition, two or more of these materials may be used to form the separator, or these materials may be stacked to form the separator.

In the present embodiment, the air resistance of the separator according to the Gurley method defined by JIS P 8117 is preferably 50 sec/100 cc or more and 300 sec/100 cc or less, and more preferably 50 sec/100 cc or more and 200 sec/100 cc or less in order for the electrolyte to favorably permeate therethrough during battery use (during charging and discharging).

In addition, the porosity of the separator is preferably 30 vol% or more and 80 vol% or less, and more preferably 40 vol% or more and 70 vol% or less. The separator may be a laminate of separators having different porosities.

(Electrolytic Solution)

The electrolytic solution included in the lithium secondary battery of the present embodiment contains an electrolyte and an organic solvent.

As the electrolyte contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, Li-BOB (here, BOB refers to bis(oxalato)borate), LiFSI (here, FSI refers to bis(fluorosulfonyl)imide), lower aliphatic carboxylic acid lithium salts, and $LiAlCl_4$ can be adopted, and a mixture of two or more of these may be used. Among these, as the electrolyte, it is preferable to use at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine.

As the organic solvent included in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by introducing a fluoro group into these organic solvents (those in which one or more of the hydrogen atoms of the organic solvent are substituted with a fluorine atom) can be used.

As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has many features such as a wide operating temperature range, being less likely to deteriorate even when charged and discharged at a high current rate, being less likely to deteriorate even during a long-term use, and being non-degradable even in a case where a graphite material such as natural graphite or artificial graphite is used as the negative electrode active material.

Furthermore, as the electrolytic solution, it is preferable to use an electrolytic solution containing a lithium salt containing fluorine such as $LiPF_6$ and an organic solvent having a fluorine substituent in order to enhance the safety of the obtained lithium secondary battery. A mixed solvent containing ethers having a fluorine substituent, such as pentafluoropropyl methyl ether and 2,2,3,3-tetrafluoropropyl difluoromethyl ether and dimethyl carbonate is even more preferable because the capacity retention ratio is high even when charging or discharging is performed at a high current rate.

A solid electrolyte may be used instead of the electrolytic solution. As the solid electrolyte, for example, an organic polymer electrolyte such as a polyethylene oxide-based polymer compound, or a polymer compound containing at least one or more of a polyorganosiloxane chain or a polyoxyalkylene chain can be used. A so-called gel type in which a non-aqueous electrolytic solution is held in a polymer compound can also be used. Inorganic solid electrolytes containing sulfides such as $Li_2S-SiS_2$, $Li_2S-GeS_2$, $Li_2S-P_2S_5$, $Li_2S-B_2S_3$, $Li_2S-SiS_2-Li_3PO_4$, $Li_2S-SiS_2-Li_2SO_4$, and $Li_2S-GeS_2-P_2S_5$ can be adopted, and a mixture of two or more thereof may be used. By using these solid electrolytes, the safety of the lithium secondary battery may be further enhanced.

In addition, in a case of using a solid electrolyte in the lithium secondary battery of the present embodiment, there may be cases where the solid electrolyte plays a role of the separator, and in such a case, the separator may not be required.

Since the positive electrode active material having the above-described configuration uses the lithium-containing metal composite oxide of the present embodiment described above, in the lithium secondary battery using the positive electrode active material, side reactions that occur inside the battery can be suppressed.

Furthermore, since the positive electrode having the above-described configuration has the positive electrode active material for a lithium secondary battery of the present embodiment described above, in the lithium secondary battery, side reactions that occur inside the battery can be suppressed.

Furthermore, since the lithium secondary battery having the above-described configuration has the positive electrode described above, a lithium secondary battery in which side reactions occurring inside the battery are suppressed compared to the related art can be achieved.

[Examples]

Next, the present invention will be described in more detail with reference to examples.

<Measurement of Bulk Density of Lithium Metal Composite Oxide (Hereinafter, Sometimes Referred to as "Tap Density")>

A bulk density was measured based on JIS R 1628-1997.

<Measurement of Average Particle Diameter of Lithium Metal Composite Oxide>

For the measurement of an average particle diameter, using a laser diffraction particle size distribution meter (LA-950, manufactured by HORIBA, Ltd.), 0.1 g of the lithium metal composite oxide powder was put into 50 ml of a 0.2 mass% sodium hexametaphosphate aqueous solution to obtain a dispersion liquid in which the powder was dispersed. The particle size distribution of the obtained dispersion liquid was measured to obtain a volume-based cumulative particle size distribution curve. In the obtained cumulative particle size distribution curve, the value of the particle diameter ($D_{50}$) viewed from the fine particle side at a 50% cumulative point was referred to as the average particle diameter of the lithium metal composite oxide.

<Compositional Analysis>

The compositional analysis of the lithium metal composite oxide powder manufactured by the method described below was performed by using an inductively coupled plasma emission analyzer (SPS 3000, manufactured by SII Nano Technology Inc.) after dissolving the obtained lithium metal composite oxide powder in hydrochloric acid.

<BET Specific Surface Area Measurement>

After 1 g of the lithium metal composite oxide powder was dried in a nitrogen atmosphere at 105°C for 30 minutes, the powder was measured using Macsorb (registered trademark) manufactured by MOUNTECH Co., Ltd.

<Measurement of Moisture Content>

The moisture content was measured using a coulometric Karl Fischer moisture meter (831 Coulometer, manufactured by Metrohm).

<Measurement of Sulfate Radical Content>

After dissolving the lithium metal composite oxide powder in hydrochloric acid, inductively coupled plasma atomic emission spectrometry (ICP) was performed to measure the amount of sulfur atoms. Next, the measured amount of sulfur atoms was converted into a sulfate radical (unit: ppm).

<Powder X-Ray Diffraction Measurement>

Powder X-ray diffraction measurement was performed using an X-ray diffractometer (X'Pert PRO manufactured by Malvern Panalytical Ltd). The lithium metal composite oxide powder was provided in a dedicated substrate, and measurement was performed using a Cu-Ka radiation source at a diffraction angle in a range of $2\theta = 10°$ to $90°$ to obtain a powder X-ray diffraction pattern. Using powder X-ray diffraction pattern comprehensive analysis software JADE 5, the half-width A of the diffraction peak within a range of $2\theta = 36.7 \pm 1°$ and the half-width B of the diffraction peak within a range of $2\theta = 48.6 \pm 1°$ were obtained from the powder X-ray diffraction pattern, and A/B was calculated.

<Production of Positive Electrode for Lithium Secondary Battery>

A paste-like positive electrode mixture was prepared by adding the lithium metal composite oxide obtained by the manufacturing method described later, a conductive material (acetylene black), and a binder (PVdF) to achieve a composition of positive electrode active material for a lithium secondary battery:conductive material:binder = 92:5:3 (mass ratio) and performing kneading thereon. During the preparation of the positive electrode mixture, N-methyl-2-pyrrolidone was used as an organic solvent.
The obtained positive electrode mixture was applied to a 40 $\mu$m-thick Al foil serving as a current collector and dried in a vacuum at 150°C for 8 hours to obtain a positive electrode for a lithium secondary battery. The electrode area of the positive electrode for a lithium secondary battery was set to 1.65 cm$^2$.

<Production of Negative Electrode for Lithium Secondary Battery>

Next, artificial graphite (MAGD manufactured by Hitachi Chemical Co., Ltd.) as a negative electrode active material, and CMC (manufactured by DKS Co. Ltd.) and SBR (manufactured by NIPPON A&L INC.) as a binder were added to achieve a composition of negative electrode active material:CMC:SRR = 98:1:1 (mass ratio) and kneaded to prepare a paste-like negative electrode mixture. During the preparation of the negative electrode mixture, ion exchange water was used as a solvent.

The obtained negative electrode mixture was applied to a 12 $\mu$m-thick Cu foil serving as a current collector and dried in a vacuum at 60°C for 8 hours to obtain a negative electrode for a lithium secondary battery. The electrode area of the negative electrode for a lithium secondary battery was set to 1.77 cm$^2$.

<Production of Lithium Secondary Battery (Coin Type Full Cell)

The following operation was performed in a glove box under an argon atmosphere.

The positive electrode for a lithium secondary battery produced in <Production of Positive Electrode for Lithium Secondary Battery> was placed on the lower lid of a part for coin type battery R2032 (manufactured by Hohsen Corp.) with the aluminum foil surface facing downward, and a laminated film separator (a heat-resistant porous layer (thickness 16 $\mu$m) was laminated on a polyethylene porous film) was placed thereon. 300 $\mu$l of the electrolytic solution was injected thereinto. As the electrolytic solution, an electrolytic solution obtained by dissolving, in a mixed solution of ethylene carbonate (hereinafter, sometimes indicated as EC), dimethyl carbonate (hereinafter, sometimes indicated as DMC), and ethyl methyl carbonate (hereinafter, sometimes indicated as EMC) in a ratio of 16:10:74 (volume ratio), 1 vol% of vinylene carbonate (hereinafter, sometimes indicated as VC), and dissolving LiPF$_6$ therein to achieve 1.3 mol/l (hereinafter, sometimes indicated as LiPF$_6$/EC+DMC+EMC) was used.

Next, the negative electrode for a lithium secondary battery produced in <Production of Negative Electrode for Lithium Secondary Battery> was placed on the upper side of the laminated film separator, covered with the upper lid via a gasket, and caulked by a caulking machine, whereby a lithium secondary battery (coin type full cell R2032, hereinafter, sometimes referred to as "full cell") was produced.

<Discharge Test>

Using the full cell produced in <Production of Lithium Secondary Battery (Coin Type Full Cell), an initial charge/discharge test was performed under the following conditions.

<Charge/Discharge Test Conditions>

Test temperature: 25°C

Charging maximum voltage 4.2 V, charging time 6 hours, charging current 0.2 CA, constant current constant voltage charging
Discharging minimum voltage 2.7 V, discharging time 5 hours, discharging current 0.2 CA, constant current discharging

<DC Resistance Measurement>

With the discharge capacity measured above as the charging depth (hereinafter, sometimes indicated as SOC) of 100%, a battery resistance at 15% SOC was measured at 25°C. In addition, adjustment to each SOC was performed in an environment at 25°C. For the measurement of the battery resistance, a full cell with adjusted SOC was allowed to be left for 2 hours in a thermostatic bath at 25°C, discharged at 20 $\mu$A for 15 seconds, left for 5 minutes, charged at 20 $\mu$A for 15 seconds, left for 5 minutes, discharged at 40 $\mu$A for 15 seconds, left for 5 minutes, charged at 20 $\mu$A for 30 seconds, left for 5 minutes, discharged at 80 $\mu$A for 15 seconds, left for 5 minutes, charged at 20 $\mu$A for 60 seconds, left for 5 minutes, discharged at 160 $\mu$A for 15 seconds, left for 5 minutes, charged at 20 $\mu$A for 120 seconds, and left for 5 minutes in this order. As the battery resistance, an approximate curve was calculated from the plot of the battery voltage after 10 seconds measured at the time of discharging at 20, 40, 80 and 120 $\mu$A with respect to each current value using the least squares approximation method, and the slope of this approximate curve was used as the battery resistance.

<Production of lithium secondary battery (Laminated Cell)>

The positive electrode for a lithium secondary battery produced in <Production of Positive Electrode for Lithium Secondary Battery> was placed on an aluminum laminate film with the aluminum foil surface facing downward, and a laminated film separator (a polyethylene porous film (thickness 27 $\mu$m)) was placed thereon. Next, on the upper side of the laminated film separator, the negative electrode for a lithium secondary battery produced in <Production of Negative Electrode for Lithium Secondary Battery> was placed with the copper foil surface facing upward, and the aluminum laminate film was placed thereon. Furthermore, heat sealing was performed while leaving an injection portion of an electrolytic solution. Thereafter, this was transferred to a dry bench in a dry atmosphere having a dew point temperature of minus 50°C or lower, and 1 mL of the electrolytic solution was injected using a vacuum injecting machine. As the electrolytic solution, an electrolytic solution obtained by dissolving, in a mixed solution of ethylene carbonate (hereinafter, sometimes indicated as EC), dimethyl carbonate (hereinafter, sometimes indicated as DMC), and ethyl methyl carbonate (hereinafter, sometimes indicated as EMC) in a ratio of 16:10:74 (volume ratio), 1 vol% of vinylene carbonate (hereinafter, sometimes indicated as VC), and dissolving $LiPF_6$ therein to achieve 1.3 mol/l (hereinafter, sometimes indicated as $LiPF_6$/EC+DMC+EMC) was used.

Finally, the injection portion of the electrolytic solution was heat-sealed to produce a laminated cell.

<Measurement of Gas Swelling Volume>

An X-ray CT scan was performed on the laminated cell produced as described above, and the volume of the laminated cell before the test was calculated. In addition, charging and discharging were performed under the following test conditions, the volume of the laminated cell was measured again, and the volume difference before and after the test was calculated. The volume difference ($cm^3$) before and after the test was divided by the amount (g) of the positive electrode material present in the laminated cell to obtain a gas swelling volume ($cm^3$/g) per positive electrode material.

<Test Conditions>

Charge and discharge frequency: 50 times

Test temperature: 60°C

Charging maximum voltage 4.2 V, charging time 2.5 hours, charging current 0.5 CA, constant current constant voltage charging
Discharging minimum voltage 2.7 V, discharging time 1 hour, discharging current 1 CA, constant current discharging

(Example 1)

Production of Positive Electrode Active Material 1 for Lithium Secondary Battery

[Step of Manufacturing Nickel Cobalt Manganese Composite Hydroxide]

After water was put in a reaction tank equipped with a stirrer and an overflow pipe, an aqueous solution of sodium hydroxide was added thereto, and the liquid was maintained at a temperature of 50°C.

An aqueous solution of nickel sulfate, an aqueous solution of cobalt sulfate, and an aqueous solution of manganese sulfate were mixed so that the atomic ratio of nickel atoms, cobalt atoms, and manganese atoms became 0.510:0.225:0.265, whereby a mixed raw material solution was prepared.

Next, the mixed raw material solution and an aqueous solution of ammonium sulfate as a complexing agent were continuously added into the reaction tank under stirring, and an aqueous solution of sodium hydroxide was appropriately added dropwise so that the pH of the solution in the reaction tank became 11.75 when measured at 40°C. Then, an oxidizing gas in which nitrogen gas was mixed with air was flowed to adjust various liquid amounts so as to cause the reaction time to be 20.4 hours, whereby nickel cobalt manganese composite hydroxide particles were obtained. The particles were washed with a sodium hydroxide solution, thereafter dehydrated by a centrifuge so as to be isolated, and dried at 105°C, whereby a nickel cobalt manganese composite hydroxide 1 was obtained.

[Mixing Step]

The nickel cobalt manganese composite hydroxide 1 thus obtained and lithium carbonate powder were weighed to achieve Li/(Ni + Co + Mn) = 1.07 by molar ratio and mixed.

[Calcining Step]

Thereafter, the mixture obtained in the mixing step was calcined in an oxygen atmosphere at 870°C for 5 hours to obtain a positive electrode active material 1 for a lithium secondary battery.

Evaluation of Positive Electrode Active Material 1 for Lithium Secondary Battery

Compositional analysis of the obtained positive electrode active material 1 for a lithium secondary battery was performed, and when the composition was made to correspond to Composition Formula (I), x = 0.024, y = 0.221, z = 0.261, and w = 0.000 were obtained.

(Example 2)

Manufacturing of Positive Electrode Active Material 2 for Lithium Secondary Battery

[Mixing Step]

The nickel cobalt manganese composite hydroxide 1 and lithium carbonate powder were weighed to achieve Li/(Ni + Co + Mn) = 1.07 by molar ratio and mixed.

[Calcining Step]

The mixture obtained in the mixing step was calcined in an oxygen atmosphere at 930°C for 5.6 hours to obtain a calcined product 2.

[Coating Step]

The calcined product 2 and aluminum oxide were weighed to achieve Al/(Ni + Co + Mn) = 0.01, mixed, and heat-treated in an air atmosphere at 760°C for 5 hours to obtain a positive electrode active material 2 for a lithium secondary battery.

Evaluation of Positive Electrode Active Material 2 for Lithium Secondary Battery

Compositional analysis of the obtained positive electrode active material 2 for a lithium secondary battery was performed, and when the composition was made to correspond to Composition Formula (I), x = 0.021, y = 0.221, z = 0.262, and w = 0.008 were obtained.

(Example 3)

Production of Positive Electrode Active Material 3 for Lithium Secondary Battery

[Step of Manufacturing Nickel Cobalt Manganese Composite Hydroxide]

A mixed raw material solution was prepared by performing the same operation as in Example 1 except that mixing was performed so that the atomic ratio of nickel atoms, cobalt atoms, and manganese atoms became 0.550:0.210:0.240.
Next, the mixed raw material solution and an aqueous solution of ammonium sulfate as a complexing agent were continuously added into the reaction tank under stirring, and an aqueous solution of sodium hydroxide was appropriately added dropwise so that the pH of the solution in the reaction tank became 10.54 when measured at 40°C. Then, an oxidizing gas in which nitrogen gas was mixed with air was flowed to adjust various liquid amounts so as to cause the reaction time to be 20.1 hours, whereby nickel cobalt manganese composite hydroxide particles were obtained. The particles were washed with a sodium hydroxide solution, thereafter dehydrated by a centrifuge so as to be isolated, and dried at 105°C, whereby a nickel cobalt manganese composite hydroxide 3 was obtained.

[Mixing Step]

The nickel cobalt manganese composite hydroxide 3 thus obtained and lithium carbonate powder were weighed to achieve Li/(Ni + Co + Mn) = 1.07 by molar ratio and mixed.

[Calcining Step]

Thereafter, the mixture obtained in the mixing step was calcined in an oxygen atmosphere at 870°C for 5.6 hours to obtain a positive electrode active material 3 for a lithium secondary battery.

Evaluation of Positive Electrode Active Material 3 for Lithium Secondary Battery

Compositional analysis of the obtained positive electrode active material 3 for a lithium secondary battery was performed, and when the composition was made to correspond to Composition Formula (I), x = 0.035, y = 0.208, z = 0.237, and w = 0.000 were obtained.

(Example 4)

Manufacturing of Positive Electrode Active Material 4 for Lithium Secondary Battery

[Step of Manufacturing Nickel Cobalt Aluminum Composite Hydroxide]

After water was put in a reaction tank equipped with a stirrer and an overflow pipe, an aqueous solution of sodium hydroxide was added thereto, and the liquid was maintained at a temperature of 70°C.

An aqueous solution of nickel sulfate, an aqueous solution of cobalt sulfate, and an aqueous solution of aluminum sulfate were mixed so that the atomic ratio of nickel atoms, cobalt atoms, and aluminum atoms became 0.750:0.200:0.050, whereby a mixed raw material solution was prepared.

Next, the mixed raw material solution and an aqueous solution of ammonium sulfate as a complexing agent were continuously added into the reaction tank under stirring, and an aqueous solution of sodium hydroxide was appropriately added dropwise so that the pH of the solution in the reaction tank became 11.02 when measured at 40°C. Then, an oxidizing gas in which nitrogen gas was mixed with air was flowed to adjust various liquid amounts so as to cause the reaction time to be 10.7 hours, whereby nickel cobalt aluminum composite hydroxide particles were obtained. The particles were washed with a sodium hydroxide solution, thereafter dehydrated by a centrifuge so as to be isolated, and dried at 105°C, whereby a nickel cobalt aluminum composite hydroxide 4 was obtained.

[Mixing Step]

The nickel cobalt aluminum composite hydroxide 4 thus obtained and lithium hydroxide powder were weighed to achieve Li/(Ni + Co + Al) = 1.07 by molar ratio and mixed.

[Calcining Step]

Thereafter, the mixture obtained in the mixing step was calcined in an oxygen atmosphere at 780°C for 6.1 hours to obtain a calcined product 4.

[Washing Step]

Thereafter, the obtained calcined product 4 was washed with water. The washing step was performed by stirring a slurry-like liquid obtained by adding the calcined product 4 to pure water, for 10 minutes, and dehydrating the liquid.

[Drying Step]

Thereafter, a wet cake obtained in the washing step was dried at 105°C for 20 hours to obtain a lithium metal composite oxide washed and dried powder 4.

[Heat Treatment Step]

The lithium metal composite oxide washed and dried powder 4 obtained in the above step was heat-treated in an oxygen atmosphere at 780°C for 5 hours to obtain a positive electrode active material 4 for a lithium secondary battery.

Evaluation of Positive Electrode Active Material 4 for Lithium Secondary Battery

Compositional analysis of the obtained positive electrode active material 4 for a lithium secondary battery was performed, and when the composition was made to correspond to Composition Formula (I), x = 0.000, y = 0.199, z = 0.000, and w = 0.050 were obtained.

(Comparative Example 1)

Manufacturing of Positive Electrode Active Material 5 for Lithium Secondary Battery

[Step of Manufacturing Nickel Cobalt Manganese Composite Hydroxide]

A nickel cobalt manganese composite hydroxide 5 was obtained by performing the same operation as in Example 3 except that an aqueous solution of sodium hydroxide was appropriately added dropwise so that the pH of the solution in the reaction tank became 11.88 when measured at 40°C, then an oxidizing gas in which nitrogen gas was mixed with air was flowed to adjust various liquid amounts so as to cause the reaction time to be 17.6 hours.

[Mixing Step]

The nickel cobalt manganese composite hydroxide 5 thus obtained and lithium carbonate powder were weighed to achieve Li/(Ni + Co + Mn) = 1.07 by molar ratio and mixed.

[Calcining Step]

Thereafter, the mixture obtained in the mixing step was calcined in a dry air atmosphere at 850°C for 5.0 hours to obtain a positive electrode active material 5 for a lithium secondary battery.
Evaluation of Positive Electrode Active Material 5 for Lithium Secondary Battery
Compositional analysis of the obtained positive electrode active material 5 for a lithium secondary battery was performed, and when the composition was made to correspond to Composition Formula (I), x = 0.031, y = 0.207, z = 0.242, and w = 0.000 were obtained.

(Comparative Example 2)

Manufacturing of Positive Electrode Active Material 6 for Lithium Secondary Battery

[Step of Manufacturing Nickel Cobalt Manganese Composite Hydroxide]

A nickel cobalt manganese composite hydroxide 6 was obtained by performing the same operation as in Example 3 except that an aqueous solution of sodium hydroxide was appropriately added dropwise so that the pH of the solution in the reaction tank became 12.52 when measured at 40°C, then an oxidizing gas in which nitrogen gas was mixed with air was flowed to adjust various liquid amounts so as to cause the reaction time to be 12.1 hours.

[Mixing Step]

The nickel cobalt manganese composite hydroxide 6 thus obtained and lithium carbonate powder were weighed to achieve Li/(Ni + Co + Mn) = 1.07 by molar ratio and mixed.

[Calcining Step]

Thereafter, the mixture obtained in the mixing step was calcined in a dry air atmosphere at 860°C for 10.0 hours to obtain a positive electrode active material 6 for a lithium secondary battery.

Evaluation of Positive Electrode Active Material 6 for Lithium Secondary Battery

Compositional analysis of the obtained positive electrode active material 6 for a lithium secondary battery was performed, and when the composition was made to correspond to Composition Formula (I), x = 0.038, y = 0.209, z = 0.241, and w = 0.000 were obtained.

(Comparative Example 3)

Manufacturing of Positive Electrode Active Material 7 for Lithium Secondary Battery

[Step of Manufacturing Nickel Cobalt Manganese Composite Hydroxide]

A nickel cobalt manganese composite hydroxide 7 was obtained by performing the same operation as in Example 1 except that an aqueous solution of sodium hydroxide was appropriately added dropwise so that the pH of the solution in the reaction tank became 11.36 when measured at 40°C, then an oxidizing gas in which nitrogen gas was mixed with air was flowed to adjust various liquid amounts so as to cause the reaction time to be 10.9 hours.

[Mixing Step]

The nickel cobalt manganese composite hydroxide 7 thus obtained and lithium carbonate powder were weighed to achieve Li/(Ni + Co + Mn) = 1.07 by molar ratio and mixed.

[Calcining Step]

The mixture obtained in the mixing step was calcined in an oxygen atmosphere at 870°C for 5.6 hours to obtain a calcined product 7.

[Coating Step]

The calcined product 7 and aluminum oxide were weighed to achieve Al/(Ni + Co + Mn) = 0.01, mixed, and heat-treated in an air atmosphere at 760°C for 3 hours to obtain a positive electrode active material 7 for a lithium secondary battery.

Evaluation of Positive Electrode Active Material 7 for Lithium Secondary Battery

Compositional analysis of the obtained positive electrode active material 7 for a lithium secondary battery was performed, and when the composition was made to correspond to Composition Formula (I), x = 0.018, y = 0.222, z = 0.262, and w = 0.009 were obtained.

(Comparative Example 4)

Manufacturing of Positive Electrode Active Material 8 for Lithium Secondary Battery

[Step of Manufacturing Nickel Cobalt Manganese Aluminum Composite Hydroxide]

After water was put in a reaction tank equipped with a stirrer and an overflow pipe, an aqueous solution of sodium hydroxide was added thereto, and the liquid was maintained at a temperature of 60°C.
An aqueous solution of nickel sulfate, an aqueous solution of cobalt sulfate, an aqueous solution of manganese sulfate, and an aqueous solution of aluminum sulfate were mixed so that the atomic ratio of nickel atoms, cobalt atoms, manganese atoms, and aluminum atoms became 0.855:0.095:0.020:0.030, whereby a mixed raw material solution was prepared.
Next, the mixed raw material solution and an aqueous solution of ammonium sulfate as a complexing agent were continuously added into the reaction tank under stirring, and an aqueous solution of sodium hydroxide was appropriately added dropwise so that the pH of the solution in the reaction tank became 12.12 when measured at 40°C. Then, an oxidizing gas in which nitrogen gas was mixed with air was flowed to adjust various liquid amounts so as to cause the reaction time to be 10.5 hours, whereby nickel cobalt manganese aluminum composite hydroxide particles were obtained. The particles were washed with a sodium hydroxide solution, thereafter dehydrated by a centrifuge so as to be isolated, and dried at 105°C, whereby a nickel cobalt manganese aluminum composite hydroxide 8 was obtained.

[Oxidizing Step]

The nickel cobalt manganese aluminum composite hydroxide 8 thus obtained was oxidized in an oxygen atmosphere at 770°C for 5 hours to obtain a nickel cobalt manganese aluminum composite oxide 8.

[Mixing Step]

The nickel cobalt manganese aluminum composite oxide 8 thus obtained and lithium hydroxide powder were weighed to achieve Li/(Ni + Co + Mn + Al) = 1.00 by molar ratio and mixed.

[Calcining Step]

The mixture obtained in the mixing step was calcined in an oxygen atmosphere at 770°C for 5 hours, and further heat-treated in an oxygen atmosphere at 770°C for 5 hours to obtain a positive electrode active material 8 for a lithium secondary battery.

Evaluation of Positive Electrode Active Material 8 for Lithium Secondary Battery

Compositional analysis of the obtained positive electrode active material 8 for a lithium secondary battery was performed, and when the composition was made to correspond to Composition Formula (I), x = -0.002, y = 0.095, z = 0.020, and w = 0.026 were obtained.

The results of each composition of the lithium metal composite oxides of Examples 1 to 4 and Comparative Examples 1 to 4, the requirement of (1) (BET specific surface area), the requirement of (2) (the ratio (X/Y) when the average secondary particle diameter $D_{50}$ is indicated as X and the calculated particle diameter is indicated as Y), the requirement of (3) (the ratio of the amount of residual lithium (mass%) contained in the lithium metal composite oxide to the BET specific surface area ($m^2$/g)), A/B when the half-width of the diffraction peak in a range of $2\theta = 36.7 \pm 1°$ is indicated as A and the half-width of the diffraction peak in a range of $2\theta = 48.6 \pm 1°$ is indicated as B in the powder X-ray diffraction measurement using CuKa radiation, the sulfate radical content, the moisture content, the resistance at 15% SOC, and the gas swelling volume are collectively shown in Table 1.

[Table 1]

| | x | y | z | w | M | $D_{50}$ ($\mu$m) | Calculated particle di-ameter ($\mu$m) | Requirement of (1) | Requirement of (2) | Requirement of (3) | A/B | $SO_4$ (ppm) | $H_2O$ (ppm) | Resistance at 15% SOC ($\Omega$) | Gas swelling volume ($cm^3$/g) |
|---|---|---|---|---|---|---|---|---|---|---|---|---|---|---|---|
| Example 1 | 0.024 | 0.221 | 0.261 | 0.000 | - | 5.9 | 4.8 | 0.69 | 1.2 | 0.10 | 0.89 | 2000 | 318 | 36.3 | 0.05 |
| Example 2 | 0.021 | 0.221 | 0.262 | 0.008 | A1 | 6.6 | 3.8 | 0.89 | 1.7 | 0.06 | 0.88 | 2400 | 198 | 36.1 | 0.06 |
| Example 3 | 0.035 | 0.208 | 0.237 | 0.000 | - | 13.1 | 4.8 | 0.48 | 2.7 | 0.21 | 0.89 | 5800 | 216 | 20.1 | 0.12 |
| Example 4 | 0.000 | 0.199 | 0.000 | 0.050 | A1 | 15.1 | 10.2 | 0.26 | 1.5 | 0.15 | 0.89 | 1000 | 78 | 33.1 | 0.10 |
| Comparative Example 1 | 0.031 | 0.207 | 0.242 | 0.000 | - | 4.0 | 4.2 | 0.96 | 1.0 | 0.08 | 0.83 | 480 | 234 | 42.9 | 0.09 |
| Comparative Example 2 | 0.038 | 0.209 | 0.241 | 0.000 | - | 6.2 | 2.1 | 1.70 | 3.0 | 0.09 | 0.87 | 2200 | 512 | 22.8 | 2.24 |
| Comparative Example 3 | 0.018 | 0.222 | 0.262 | 0.009 | A1 | 6.1 | 2.6 | 1.20 | 2.3 | 0.07 | 0.87 | 3000 | 344 | 29.7 | 0.45 |
| Comparative Example 4 | -0.002 | 0.095 | 0.020 | 0.026 | A1 | 11.7 | 8.4 | 0.31 | 1.4 | 0.29 | 0.87 | 11300 | 135 | 35.1 | 0.77 |

[Reference Signs List]

1    Separator
2    Positive electrode
3    Negative electrode
4    Electrode group
5    Battery can
6    Electrolytic solution
7    Top insulator
8    Sealing body
10   Lithium secondary battery
21   Positive electrode lead
31   Negative electrode lead

**Claims**

1.  A lithium metal composite oxide into or from which lithium ions are dopable or dedopable,
    wherein the lithium metal composite oxide contains at least nickel and satisfies all of the following requirements of (1) to (3):

    (1) a BET specific surface area is 1.0 $m^2$/g or less,
    (2) when an average secondary particle diameter $D_{50}$ is indicated as X $\mu$m and a calculated particle diameter is indicated as Y $\mu$m, the ratio (X/Y) is 1.1 or more and 2.9 or less, where the calculated particle diameter is calculated by the following method,

$$\text{calculated particle diameter (Y)} = 2 \times 3 \,/\, (\text{BET specific surface area} \times \text{tap density}),$$

    and
    (3) the ratio (amount of residual lithium/BET specific surface area) of the amount of residual lithium (mass%) contained in the lithium metal composite oxide to the BET specific surface area ($m^2$/g) is 0.25 or less.

2.  The lithium metal composite oxide according to Claim 1,
    wherein the lithium metal composite oxide satisfies Composition Formula (I),

$$Li[Li_x(Ni_{(1-y-z-w)}Co_yMn_zM_w)_{1-x}]O_2 \dots \qquad (I)$$

    (in Formula (I), $-0.1 \leq x \leq 0.2$, $0 \leq y \leq 0.5$, $0 \leq z \leq 0.5$, $0 \leq w \leq 0.1$, and $y + z + w < 1$ are satisfied, and M represents one or more metals selected from the group consisting of Fe, Cu, Ti, Mg, Al, W, B, Mo, Nb, Zn, Sn, Zr, Ga, and V).

3.  The lithium metal composite oxide according to Claim 2,
    wherein $y + z + w \leq 0.5$ is satisfied in Composition Formula (I).

4.  The lithium metal composite oxide according to any one of Claims 1 to 3,
    wherein, in a powder X-ray diffraction measurement using CuKa radiation, when a half-width of a diffraction peak in a range of $2\theta = 36.7 \pm 1°$ is indicated as A and a half-width of a diffraction peak in a range of $2\theta = 48.6 \pm 1°$ is indicated as B, A/B is 0.88 or more.

5.  The lithium metal composite oxide according to any one of Claims 1 to 4,
    wherein a sulfate radical content is 5000 ppm or less.

6.  The lithium metal composite oxide according to any one of Claims 1 to 5,
    wherein a moisture content is 1000 ppm or less.

7. A positive electrode active material for a lithium secondary battery, comprising:
   the lithium metal composite oxide according to any one of Claims 1 to 6.

8. A positive electrode, comprising:
   the positive electrode active material for a lithium secondary battery according to Claim 7.

9. A lithium secondary battery, comprising:
   the positive electrode according to Claim 8.

# FIG. 1A

# FIG. 1B

## INTERNATIONAL SEARCH REPORT

International application No.

PCT/JP2019/007782

### A. CLASSIFICATION OF SUBJECT MATTER
Int.Cl. H01M4/525(2010.01)i, C01G53/00(2006.01)i, H01M4/505(2010.01)i

According to International Patent Classification (IPC) or to both national classification and IPC

### B. FIELDS SEARCHED

Minimum documentation searched (classification system followed by classification symbols)
Int.Cl. H01M4/48-4/525, C01G53/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-026981 A (ASAHI GLASS CO., LTD.) 18 February 2016, paragraphs [0001], [0022], [0035]-[0152], tables 2-3 & US 2015/0380737 A1 paragraphs [0001], [0021], [0034]-[0160], tables 2-3 & CN 105226266 A | 1-9 |
| X | JP 2011-113792 A (NIPPON CHEMICAL INDUSTRIAL CO., LTD.) 09 June 2011, paragraphs [0001], [0013]-[0075], tables 1-3 & WO 2011/065391 A1 & CN 102668187 A & KR 10-2012-0114232 A | 1-2, 4-9 |
| A | JP 2007-123255 A (ISHIHARA SANGYO KAISHA, LTD.) 17 May 2007, paragraphs [0001], [0009] (Family: none) | 5 |

☒ Further documents are listed in the continuation of Box C.   ☐ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 20 May 2019 (20.05.2019) | 28 May 2019 (28.05.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2019/007782

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2014-192136 A (ASAHI KASEI CORP.) 06 October 2014, paragraphs [0001], [0018]-[0022] (Family: none) | 6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018036806 A
- JP 2006318929 A
- JP 2002201028 A